# EUROPEAN PATENT APPLICATION

(11) **EP 4 336 777 A1**
(43) Date of publication of application: **13.03.2024**
(21) Application number: 22194603.1
(22) Date of filing: 08.09.2022
(51) Int. Cl.: H04L 9/40, H04W 12/069, H04W 48/18, H04W 76/10

(54) **METHOD FOR ENABLING OR SETTING UP TO OPERATIVELY USE A CUSTOMER PREMISES EQUIPMENT WITH A BROADBAND ACCESS NETWORK OF A TELECOMMUNICATIONS NETWORK, SYSTEM OR BROADBAND ACCESS NETWORK, CUSTOMER PREMISES EQUIPMENT, ACCESS CONFIGURATION ENTITY OR FUNCTIONALITY, PROGRAM AND COMPUTER-READABLE MEDIUM**

(71) Applicant: Deutsche Telekom AG, 53113 Bonn (DE)
(72) Inventor: HAAG, Thomas, 63110 Rodgau (DE); LEHMANN, Dirk, 50374 Erftstadt (DE); DORHMI, Samir, 81929 München (DE); SCHNEIDER, Fabian, Dr., 64283 Darmstadt (DE); HURST, Wolfgang, 63225 Langen (DE)
(74) Representative: Schwöbel, Thilo K.

(57) **Abstract**

The invention relates to a method for enabling or setting up to operatively use a customer premises equipment with a broadband access network of a telecommunications network in view of the broadband access network or the telecommunications network providing, using a wireline access communication link, communication services to the customer premises equipment or to a client device related or connected to the customer premises equipment,
wherein the broadband access network comprises at least one access node, the access node being enabled to operatively connect the customer premises equipment to the telecommunications network,
wherein, in view of enabling or setting up to operatively use the customer premises equipment, the method comprises the following:
-- transmitting, by the customer premises equipment and via the wireline access communication link, an identifier information to the access node, the identifier information relating to the customer premises equipment and the transmission of the identifier information resulting in the customer premises equipment and/or the client device being able to be used, via the wireline access communication link, for restricted communication services, and thereafter
-- receiving, by the customer premises equipment and/or by the client device and via the wireline access communication link and as part of the restricted communication services, a service provider information,
-- transmitting, by the customer premises equipment and/or by the client device and via the wireline access communication link and as part of the restricted communication services, a credential information, and thereafter
-- allowing the customer premises equipment to be operatively used with the broadband access network using the wireline access communication link for communication services.

## Description

### BACKGROUND

The present invention relates a method for enabling or setting up to operatively use a customer premises equipment with a broadband access network of a telecommunications network in view of the broadband access network or the telecommunications network providing, using a wireline access communication link, communication services to the customer premises equipment or to a client device related or connected to the customer premises equipment.

Additionally, the present invention relates to a system or broadband access network for enabling or setting up to operatively use a customer premises equipment with the broadband access network of a telecommunications network in view of the broadband access network or the telecommunications network providing, using a wireline access communication link, communication services to the customer premises equipment or to a client device related or connected to the customer premises equipment.

Additionally, the present invention relates to a customer premises equipment in an inventive system or in an inventive broadband access network or as part thereof.

Furthermore, the present invention relates to an access configuration entity or functionality in an inventive system or in an inventive broadband access network or as part thereof.

Furthermore, the present invention relates to a program and to a computer-readable medium for operating a broadband access network of a telecommunications network.

The exchange of packetized information in broadband communication systems or telecommunications networks, both in fixed-line as in wireless communication systems (or fixed-line communication networks and mobile communication networks) has already grown dramatically and probably will also grow in the future due to the rapid spread of different data services in such communication networks.

In conventionally known telecommunications networks, a customer of such a telecommunications network is typically served by an access provider, i.e. typically the operator of the telecommunications network. In such a situation, such a customer typically needs to have a business relationship with such an access provider. However, this is not necessarily the case if the access provider follows or is obliged to follow a whole sale approach, i.e. in case that a service provider provides communication services to a customer requesting or requiring these communication services, wherein the service provider might be different from the operator of the broadband access network, and the service provider uses the broadband access network (operated by the access provider) in order to provide the requested communication services to the customer.

In such a whole sale scenario, there is often a network neutrality principle to be respected. In such a situation, there might be a need, at or for a given or considered wireline access communication link of the broadband access network, to be provided with knowledge regarding available access providers (at the given or considered wireline access communication link), especially in case that, at that given or considered wireline access communication link, the communication services of a plurality of different access providers are, at least in principle, accessible.

### SUMMARY

An object of the present invention is to provide a technically simple, effective and cost effective solution for enabling or setting up to operatively use a customer premises equipment with a broadband access network of a telecommunications network in view of the broadband access network or the telecommunications network providing, using a wireline access communication link, communication services to the customer premises equipment or to a client device related or connected to the customer premises equipment, especially in case that the customer premises equipment is unknown to the telecommunications network or has previously not been connected to the telecommunications network and/or especially in case that a network neutrality principle is to be respected. A further object of the present invention is to provide a corresponding system or broadband access network, a corresponding customer premises equipment and a corresponding access configuration entity or functionality, as well as a corresponding program and a computer-readable medium.

The object of the present invention is achieved by a method for enabling or setting up to operatively use a customer premises equipment with a broadband access network of a telecommunications network in view of the broadband access network or the telecommunications network providing, using a wireline access communication link, communication services to the customer premises equipment or to a client device related or connected to the customer premises equipment,
wherein the broadband access network comprises at least one access node, the access node being enabled to operatively connect the customer premises equipment to the telecommunications network,
wherein, in view of enabling or setting up to operatively use the customer premises equipment, the method comprises the following:
   -- transmitting, by the customer premises equipment and via the wireline access communication link, an identifier information to the access node, the identifier information relating to the customer premises equipment and the transmission of the identifier information resulting in the customer premises equipment and/or the client device being able to be used, via the wireline access communication link, for restricted communication services, and thereafter
   -- receiving, by the customer premises equipment and/or by the client device and via the wireline access communication link and as part of the restricted communication services, a service provider information,
   -- transmitting, by the customer premises equipment and/or by the client device and via the wireline access communication link and as part of the restricted communication services, a credential information, and thereafter
   -- allowing the customer premises equipment to be operatively used with the broadband access network using the wireline access communication link for communication services.

It is thereby advantageously possible according to the present invention to provide a method for enabling or setting up to operatively use the customer premises equipment implementing network neutrality, especially such that, at a given or considered wireline access communication link, the communication services of a plurality of different access providers are equally accessible, or equally presented as being accessible - especially by means of providing, using the service provider information, a list of available service providers -, i.e. that those different access providers (accessible at or via the given or considered wireline access communication link) are made known to a customer wanting to set up a corresponding communication service.
Additionally, it is advantageously possible according to the present invention to provide a method for enabling or setting up to operatively use the customer premises equipment such that, at the given or considered wireline access communication link and in case that a customer uses a customer premises equipment device provided by (or being linked to) a specific service provider, it is easily possible to verify or check (and in the affirmative case to confirm, especially by means of an indication or confirmation, using the service provider information, that a predetermined service provider is available) that the specific service provider is indeed accessible (at the given or considered wireline access communication link).
Hence according to the present invention, it is advantageously possible that the customer premises equipment is enabled to be used and/or operatively connected to the telecommunications network by means of connecting, in a first step, the customer premises equipment to the wireline access communication link, especially a fiber communication link such as a line of a passive optical network, PON, or the like, which typically results in transmitting (likewise in or during or as part of the first step), by the customer premises equipment and via the wireline access communication link, an identifier information to the access node (of the broadband access network), the identifier information relating to the customer premises equipment and the transmission of the identifier information resulting in the customer premises equipment and/or the client device being able to be used, via the wireline access communication link, for restricted communication services.
According to the present invention, in a subsequent second step, the customer premises equipment and/or the client device receives, via the wireline access communication link and as part of the restricted communication services, the service provider information (typically being or comprising either a list of available service providers or an indication or confirmation that a predetermined service provider is available).
According to the present invention, in a subsequent third step, the customer premises equipment and/or the client device transmits, via the wireline access communication link and as part of the restricted communication services, a credential information, resulting, in a subsequent fourth step, in allowing the customer premises equipment to be operatively used with the broadband access network using the wireline access communication link for communication services, i.e. in a manner not being limited to the restricted communication services.

According to the present invention, this procedure for enabling or setting up to operatively use the customer premises equipment is especially relevant in case of the broadband access network relying on or using (at least partly) a shared medium between, on the one hand, the access node of the broadband access network, and, on the other hand, the customer premises equipment:
For example, in a DSL-based (digital subscriber line-based) network (typically using a point-to-point connection between the access node and the customer premises equipment), the subscriber typically can be assigned to a direct (or individual) port (of the access node) and, hence, be identified in or by the broadband access network. However, when access technologies are involved using a shared network or a shared medium (such as, e.g., passive optical networks, PON) an individual subscriber (such as, e.g. a customer premises equipment) is typically not able to be assigned or identified directly; the customer port (i.e. the customer premises equipment) and its terminal (e.g., in case of using PON, an optical network terminal, ONT) needs to be known to the broadband access network.
For example, in conventionally known telecommunications networks, the ONT is typically configured by the serial number of the customer premises equipment via an element management system (EMS system) of the broadband access network or the telecommunications network. For this purpose, the network operator (hereinafter also called access provider) needs to have this (registration) information or identifier information. Hence, in conventionally known telecommunications networks, this registration information (or identification information) needs usually to be transmitted by the customer via a different path (e.g. using a telephone, an application or app or similar), i.e. not in-band; in order to do this, however, the customer must already have a business relationship with the access provider which would not be in compliance with the principle of network neutrality.
Hence, in conventionally known telecommunications networks, especially in case of the customer premises equipment being unknown to the telecommunications network or having previously not been connected to the telecommunications network (and, especially additionally, in case of using an access technology relying on a shared network or a shared medium), a user plane communication channel is refused by the broadband access network, i.e. access attempts initiated by unknown customers (i.e. unknown customer premises equipments) are blocked or even completely blocked, as (in such a situation in a conventionally known telecommunications network) it is still unknown, regarding this considered customer premises equipment, to which possible A10NSP carrier (i.e. to which service provider) the customer (using the considered customer premises equipment) belongs. According to legal requirements, the access provider (i.e. the telecommunications network or broadband access network) is not allowed to analyze the data stream or to process it in case of the customer premises equipment relating to a bit stream customer; since there is no possibility to inspect any data, the only solution is to block the connection, or to ignore it if the customer (i.e. the customer premises equipment considered) is unknown.
The situation of a customer premises equipment being unknown to the telecommunications network or having previously not been connected to the telecommunications network, e.g., occurs in case of an exchange of the customer premises equipment device, e.g. an exchange of the optical network terminal device. In this case, the access provider loses the association with the customer, as this association is based on an identifier information related to the hardware device of the customer premises equipment, e.g. the serial number of the optical network terminal, and when the optical network terminal is swapped or changed, this serial number changes. In conventionally known telecommunications networks, this leads the access provider (since it now classifies or detects the customer premises equipment or customer as unknown) to block or to ignore the customer and to refuse to establish connections, at least no user plane connections.

The telecommunications network according to the present invention might be a fixed-line telecommunications network or a mobile communication network but could also have both aspects, i.e. parts of a fixed-line telecommunications network (or being a fixed-line telecommunications network in such parts) and parts of a mobile communication network (or being a mobile communication network in such parts); such networks are also known under the term fixed-mobile-convergence networks (FMC networks). Hence, the presented invention can be applied in both fixed disaggregated networks (e.g. ONF (Open Network Foundation) SEBA (SDN-Enabled Broadband Access) 2.0) and mobile networks (e.g. via 5G, 6G), as well as in hybrid mixed forms.

According to an embodiment of the present invention, it is advantageously possible and preferred that the service provider information corresponds to or comprises or references a list of service provider, that are available, to the customer premises equipment, when using the wireline access communication link and the access node, wherein the method furthermore comprises:
-- transmitting, by the customer premises equipment and/or by the client device and via the wireline access communication link and as part of the restricted communication services, a provider selection information in response to the service provider information, and thereafter,
-- receiving, by the customer premises equipment and/or by the client device and via the wireline access communication link and as part of the restricted communication services, a credential request information, wherein the credential information is transmitted in response to the credential request information.

According to such an embodiment of the present invention, the service provider information corresponds to or comprises or references a list of different service providers that are available, to the customer premises equipment, when using the wireline access communication link and the access node, i.e. the customer premises equipment used is typically not 'branded', i.e. not linked to a specific service provider, and it is up to the customer which one of the available service providers is chosen (to provide communication services). Such an embodiment, typically, also involves to transmit (by the customer premises equipment) a provider selection information to the broadband access network, and to receive (likewise by the customer premises equipment). a credential request information as different service providers might require different kinds or types of credential information. Hence, according to such an embodiment of the present invention, it is advantageously possible to easily and effectively implement the inventive method.

According to another embodiment of the present invention (especially as an alternative to the aforementioned embodiment), it is furthermore advantageously possible and preferred that the service provider information corresponds to or comprises an indication or confirmation that a predetermined service provider is available, to the customer premises equipment, when using the wireline access communication link and the access node,
wherein especially the customer premises equipment and/or the client device receives, via the wireline access communication link and as part of the restricted communication services, a credential request information, wherein the credential information is transmitted in response to the credential request information.

According to such an embodiment of the present invention, the service provider information corresponds to or comprises the indication or confirmation that a predetermined (specific) service provider is available to the (or, rather, to this) customer premises equipment, typically corresponding to the customer premises equipment used being provided by (or linked to) the specific service provider, i.e. it is typically 'branded', hence the customer does not have a choice which one of the (in principle, typically more than one) available service providers is chosen (to provide communication services). Such an embodiment especially also involves that the customer premises equipment receives a credential request information. Hence, according to such an embodiment of the present invention, it is advantageously possible to easily and effectively implement the inventive method.

According to another embodiment of the present invention (especially being able to be combined with both aforementioned embodiments), it is furthermore advantageously possible and preferred that an access configuration entity or functionality is related to (or assigned to or part of) the broadband access network, wherein the access configuration entity or functionality transmits, via the access node and using the wireline access communication link, the service provider information,
wherein especially the access configuration entity or functionality receives the provider selection information,
wherein especially the access configuration entity or functionality transmits, via the access node and using the wireline access communication link, the credential request information.

It is thereby advantageously possible to easily and effectively implement the inventive method using the access configuration entity or functionality.

According to still another embodiment of the present invention, it is advantageously possible and preferred that the service provider information and/or the credential request information is transmitted by the access node or, at least, via the access node and using the wireline access communication link.

It is thereby advantageously possible to easily and effectively implement the inventive method.

Furthermore, according to a preferred embodiment of the present invention, the broadband access network comprises a customer determination entity or functionality, wherein, in case that the customer premises equipment is unknown to the telecommunications network or has previously not been connected to the telecommunications network, using the restricted communication services involves a user plane communication channel being established between the customer premises equipment and the customer determination entity or functionality, via the specific access node.

By means of the broadband access network comprising (or the telecommunications network comprising) the customer determination entity or functionality, it is advantageously possible, according to the present invention, to easily and effectively implement the inventive method, and especially that a user plane communication channel is able to be established (between the customer premises equipment and the customer determination entity or functionality, via the access node, resulting, especially, in the possibility of an automated federation of connection information to customer information) - especially in case that the customer premises equipment is unknown to the telecommunications network (i.e. also to the broadband access network) or has previously not been connected to the telecommunications network (i.e. also to the broadband access network). Especially, this is achieved, according to the present invention, by means of the identifier information, relating to the customer premises equipment, being transmitted, by the customer premises equipment, to the specific access node, and the user plane communication channel being established between the customer premises equipment and the customer determination entity or functionality, via the specific access node.
Hence, according to the present invention, even in case that the user is completely unknown to the (broadband access) network, it is possible that the broadband access network recognizes, automatically registers and assigns such an unknown user; this is able to be done in a non-discriminatory manner, detached from a business relationship (of the respective customer) with the access provider (i.e. in accordance with the network neutrality principle).

According to another embodiment of the present invention, it is furthermore advantageously possible and preferred that allowing the customer premises equipment to be operatively used for communication services involves the verification of the credential information and the corresponding configuration of the access node.

It is thereby advantageously possible to easily and effectively implement the inventive method.

Furthermore, the present invention relates to a system or a broadband access network for enabling or setting up to operatively use a customer premises equipment with the broadband access network of a telecommunications network in view of the broadband access network or the telecommunications network providing, using a wireline access communication link, communication services to the customer premises equipment or to a client device related or connected to the customer premises equipment,
wherein the broadband access network comprises at least one access node, the access node being enabled to operatively connect the customer premises equipment to the telecommunications network,
wherein, in view of enabling or setting up to operatively use the customer premises equipment, the system or broadband access network is configured such that:
   -- the broadband access network or the access node receives an identifier information, transmitted by the customer premises equipment and via the wireline access communication link, the identifier information relating to the customer premises equipment and the reception of the identifier information resulting in the customer premises equipment and/or the client device being able to be used, via the wireline access communication link, for restricted communication services,
   -- the broadband access network transmits, via the wireline access communication link and as part of the restricted communication services, a service provider information,
   -- the broadband access network or the access node receives a credential information, transmitted by the customer premises equipment and/or by the client device and via the wireline access communication link,
   resulting in the access node to be configured such that the customer premises equipment is able to be operatively used with the broadband access network using the wireline access communication link for communication services.

Additionally, the present invention relates to a customer premises equipment in an inventive system or in an inventive broadband access network, or as a part thereof.

Still additionally, the present invention relates to an access configuration entity or functionality in an inventive system or in an inventive broadband access network, or as a part thereof.

Still additionally, the present invention relates to a program comprising a computer readable program code which, when executed on a computer and/or on a network node of a telecommunications network or of a broadband access network and/or on a customer premises equipment and/or on an access configuration entity or functionality, causes the computer and/or the network node of the telecommunications network or of the broadband access network and/or the customer premises equipment and/or the access configuration entity or functionality to perform the inventive method.

Furthermore, the present invention relates to a computer-readable medium comprising instructions which when executed on a computer and/or on a network node of a telecommunications network or of a broadband access network and/or on a customer premises equipment and/or on an access configuration entity or functionality, causes the computer and/or the network node of the telecommunications network or of the broadband access network and/or the customer premises equipment and/or the access configuration entity or functionality to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a telecommunications network according to the present invention, having a broadband access network with a central office point of delivery.
Figure 2 schematically illustrates another exemplary representation of a telecommunications network according to the present invention, having a broadband access network, and using different access technologies in order to provide network connectivity to different users or subscribers.
Figure 3 schematically illustrates an exemplary embodiment how a customer premises equipment is enabled or set up to be operatively used with the broadband access network of a telecommunications network according to the present invention.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order; this is especially the case for the terms "first step", "second step", etc. It is to be understood that the terms so used are interchangeable under appropriate circumstances and that the embodiments of the invention described herein are capable of operation in other sequences than described or illustrated herein.

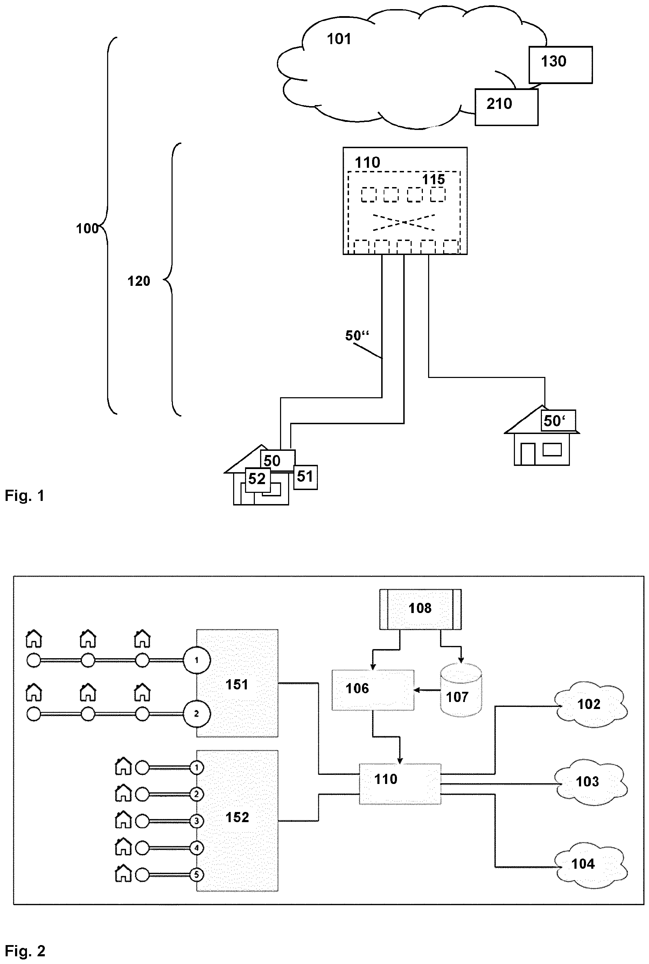

In Figure 1, a telecommunications network 100 according to the present invention is schematically shown, having - preferably - at least a fixed line part. A mobile (or cellular) part might be present as well, as part of the telecommunications network 100, but is not specifically illustrated in Figure 1. User equipments or client devices 51, 52 are connected to the telecommunications network 100 by means of a (broadband) access network 120. The telecommunications network 100 preferably (but not necessarily) comprises, especially as part of the broadband access network 120, at least one logical or physical central office point of delivery 110 that is preferably realized within a (mini) data center and that is especially handling different access requirements, especially different access possibilities, of the client devices 51, 52 to network functionalities provided by the telecommunications network 100 or via the telecommunications network 100. In addition, the telecommunications network 100 typically also comprises - besides the broadband access network 120 - a core network 101. The client devices 51, 52 are typically connected to the broadband access network 120 (and, hence, typically also to the logical or physical central office point of delivery 110) by means of a customer premises equipment device 50 (e.g. located in a home or in a flat or in a building) or by means of a customer premises equipment entity or functionality that might be built into or realized by the client devices 51, 52, wherein the connection of the customer premises equipment 50 with the broadband access network 120 is realized by means of a wireline access communication link 50", i.e. typically the customer premises equipment 50 is connected to the broadband access network 120 (especially to a passive network termination point of the broadband access network 120) using at least partly a wireline access communication link 50", typically 'a cable', e.g. a fiber link cable, or a local area network cable or a coaxial cable or the like; however, this does not exclude that a wireless communication is realized between especially a passive network termination point and a component of the broadband access network 120, such as an access node, or that the wireline access communication link 50" is a wireline access communication link 50" to connect a 5G wireline residential gateway as a customer premises equipment 50 (such a 5G wireline residential gateway realizing the user equipment functionality according to the 5G standard). Another customer premises equipment 50' (e.g. located in another home or in another flat or in another building) might be used for serving or connecting other client devices (not specifically represented in Figure 1). Preferably (but not necessarily), the central office point of delivery 110 comprises a switching fabric 115 comprising a plurality of spine network nodes and typically also a plurality of leaf network nodes which are not explicitly represented in Figure 1. The telecommunications network 100, especially as part of the broadband access network 120, furthermore also comprises a customer determination entity or functionality 130 and/or an access configuration entity or functionality 210, the customer determination entity or functionality 130 especially being involved in determining users (or subscribers) that are (hitherto) unknown to the telecommunications network 100 or broadband access network 120, and the access configuration entity or functionality 210 being involved in providing the information which service provider being, in principle, accessible at a given location and/or which requirements regarding pieces of credential information are to be applied for different service providers.

Figure 2 schematically illustrates another exemplary representation of a telecommunications network 100 according to the present invention, having a broadband access network 120, and using different access technologies in order to provide network connectivity to different users or subscribers. In this respect, the telecommunications network 100 schematically shown in Figure 2 comprises a first access node 151, such as an optical line terminal (OLT), having a plurality of access (node) ports (schematically and exemplarily numbered "1" and "2") in Figure 2. Each one of these access ports is able to serve a plurality of customer premises equipments and the associated client devices (in the exemplary embodiment shown three customer premises equipments); each customer premises equipment being schematically represented, in Figure 2, by means of a small house symbol or icon. This means that a shared medium (or a shared communication means) is used between this plurality of customer premises equipments, and the respective access node (or, rather, between these customer premises equipments, and the respective access node port of the access node). Furthermore, the telecommunications network 100 shown in Figure 2 also comprises a second access node 152, such as an MSAN, serving DSL customers. Likewise, such an MSAN access node 152 comprises a plurality of access (node) ports (schematically and exemplarily numbered "1" to "5") in Figure 2. In contrast to the first access node 151, these access (node) ports of the second access node 152 are only able to serve one customer premises equipment (and the associated client devices), each customer premises equipment again being schematically represented by means of a small house symbol or icon. The access nodes 151, 152 are connected to a service edge (entity or functionality) or broadband network gateway (entity or functionality), especially realized in or as part of a central office point of delivery 110, and the service edge (entity or functionality) or broadband network gateway (entity or functionality) 110 is controlled by a policy server 106 (with an associated policy storage entity or functionality 107, and an associated application programming interface 108. Furthermore, the service edge (entity or functionality) or broadband network gateway (entity or functionality) 110 (or central office point of delivery 110) is connected to the internet 102 and/or to a whole sale interface 103, especially a A10NSP-interface 103 (or A10NSP carrier 103) and/or to an multiprotocol label switching network 104 (or core network 101).

According to the present invention, the method relates to enabling or setting up a customer premises equipment 50 to operatively use it with a broadband access network 120 of a telecommunications network 100 in view of the broadband access network 120 (or, rather, the telecommunications network 100) providing, using the wireline access communication link 50", communication services to the customer premises equipment 50 or to the client device 51 related or connected to the customer premises equipment 50.
The broadband access network 120 comprises at least one access node 151, and the access node 151 is enabled to operatively connect the customer premises equipment 50 to the telecommunications network 100.
In such a situation, the method comprises:
-- transmitting, by the customer premises equipment 50 and via the wireline access communication link 50", an identifier information to the access node 151 (hence, the access node 151, and, consequently, the broadband access network 120 or a part thereof, receives the identifier information), the identifier information relating to the customer premises equipment 50 and the transmission of the identifier information resulting in the customer premises equipment 50 and/or the client device 51 being able to be used, via the wireline access communication link 50", for restricted communication services (also called walled garden), and thereafter
-- receiving, by the customer premises equipment 50 and/or by the client device 51 and via the wireline access communication link 50" and as part of the restricted communication services, a service provider information (hence, the service provider information is transmitted by the access node 151, hence, by the broadband access network 120, to the customer premises equipment 50),
-- transmitting, by the customer premises equipment 50 and/or by the client device 51 and via the wireline access communication link 50" and as part of the restricted communication services, a credential information (hence, the access node 151, and, consequently, the broadband access network 120 or a part thereof, receives the credential information), and thereafter
-- allowing the customer premises equipment 50 to be operatively used with the broadband access network 120 using the wireline access communication link 50" for communication services (i.e. not according to the restricted mode of operation).

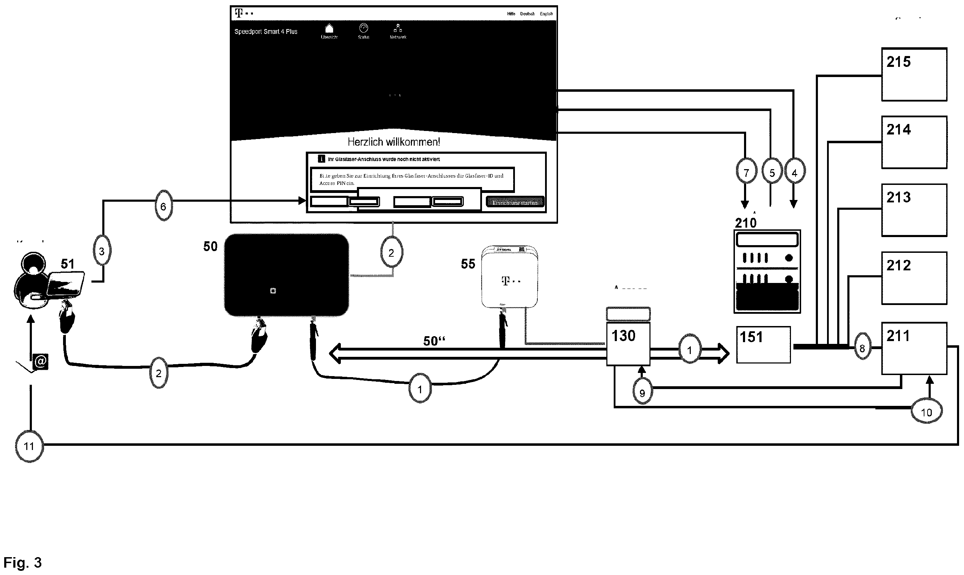

This is schematically shown in Figure 3 which illustrates an exemplary embodiment how the customer premises equipment 50 (i.e. a specific customer premises equipment 50) is enabled or set up to be operatively used with the broadband access network 120 of a telecommunications network 100 according to the present invention (at a specific considered location, e.g. inside of a house or a flat or the like). The telecommunications network 100 and the broadband access network 120 are not explicitly represented in Figure 3; however, the access node 151 (of or as part of the broadband access network 120) that is linked to (or used for) the considered access location is represented in Figure 3. Likewise, the customer determination entity or functionality 130 and the access configuration entity or functionality 210 are schematically shown in Figure 3, as well as a certain number of different access providers 211, 212, 213, 214, 215 that are possible to be accessed (or used) at the specific location of the considered customer premises equipment 50.
Typically, the access node 151 is connected, using the wireline access communication link 50", to the customer premises equipment 50, and (as a consequence of the client device 51 being connected to the customer premises equipment 50) likewise to the client device 51. This does not necessarily mean that a continuous wireline (especially optical, i.e. fiber) access communication link 50" is established between the customer premises equipment 50 and the access node 151; it is conceivable that, at least partly between these devices, there is a wireless portion of the transmission link. As part of the wireline access communication link 50", typically a passive network termination point 55 of the broadband access network 120 is used, at the specific considered location, e.g. inside of the considered house or flat or the like.
In a first processing step, indicated in Figure 3 by means of reference sign 1, the customer premises equipment 50 is connected (in the exemplary embodiment shown in Figure 3 via the passive network termination point 55) to the access node 151, using the wireline access communication link 50". This first processing step also (and automatically) involves the transmission - by the customer premises equipment 50 and via the wireline access communication link 50" - of the identifier information (of the customer premises equipment 50) to the access node 151. The identifier information relates to the customer premises equipment 50 and the transmission of the identifier information results in the customer premises equipment 50 and/or the client device 51 being able to be used, via the wireline access communication link 50", for restricted communication services (i.e. a walled-garden functionality).
In a second processing step, indicated in Figure 3 by means of reference sign 2, the client device 51 is used to either access a user interface of the customer premises equipment 50 (especially a router user interface, router Ul) or an internet-based user interface, such as a self-configuration interface accessible by a uniform resource location (URL). As part of the second processing step, or, at least, prior to a subsequent third processing step, the customer premises equipment 50 and/or the client device 51 receives the service provider information via the wireline access communication link 50". According to a specific embodiment of the present invention, exemplarily represented in Figure 3, the service provider information corresponds to (or comprises or references) a list of service providers that are available to the customer premises equipment 50 when using the wireline access communication link 50" and the access node 151, i.e. at the specific considered location of the considered customer premises, i.e. inside of a house or a flat.
In the third processing step, indicated in Figure 3 by means of reference sign 3, the customer premises equipment 50 (and/or the client device 51) transmits (via the wireline access communication link 50" and as part of the restricted communication services), the provider selection information in response to the received service provider information (being or corresponding to a list of service providers that are available to the customer premises equipment 50). The provider selection information especially comprises an indication or an information which service provider is selected by the customer premises equipment 50 and/or the client device 51.
In a fourth processing step, indicated in Figure 3 by means of reference sign 4, the access configuration entity or functionality 210 is addressed (or accessed) by the customer premises equipment 50 and/or by the client device 51 (typically using a corresponding uniform resource location (URL) of the access configuration entity or functionality 210) in view of the selected service provider indicated by the service provider information.
In a fifth processing step, indicated in Figure 3 by means of reference sign 5, the customer premises equipment 50 (and/or the client device 51) receives (via the wireline access communication link 50" and as part of the restricted communication services), the credential request information. The credential request information especially indicates which type of credential information is required, by the selected service provider, from the customer premises equipment 50 or from the client device 51.
In a sixth processing step, indicated in Figure 3 by means of reference sign 6, the customer inputs the credential information (especially to a user interface of or provided by the client device 51), and, in a seventh processing step, indicated in Figure 3 by means of reference sign 7, the customer premises equipment 50 and/or the client device 51 transmits (again via the wireline access communication link 50" and as part of the restricted communication services) the credential information (matching the credential request information obtained in the fifth processing step) to the telecommunications network 100, especially to the access configuration entity or functionality 210.
The credential information might, e.g., correspond to a combination of a fiber identifier information and an access personal identifier information (access PIN), and, in such a case, the credential request information would indicate such a requirement, i.e. for the customer premises equipment 50 and/or the client device 51 to provide, as credential information, a fiber identifier information and an access personal identifier information; however, other types or kinds of credential information might apply or be required for other service providers.
In an eighth processing step, indicated in Figure 3 by means of reference sign 8, the access configuration entity or functionality 210 provides the respective information to the selected one of the service providers 211, 212, 213, 214, 215 - i.e. to the first service provider 211 in the exemplarily illustrated situation shown in Figure 3.
In a ninth processing step, indicated in Figure 3 by means of reference sign 9, the selected (first) service provider 211 (especially by means of the customer determination entity or functionality 130) verifies the received credential information (or, at least, a part thereof such as, e.g. the access personal identifier information) and the received identifier information of the customer premises equipment 50 (at the considered access location). In a tenth processing step, indicated in Figure 3 by means of reference sign 10, and in case that the verification of the ninth processing step is successfully conducted and confirmed, the identifier information (of the customer premises equipment 50) is registered, especially by the customer determination entity or functionality 130, i.e. the customer premises equipment 50 (or its corresponding identifier information) is no longer considered relating to an unknown customer; as a consequence, in an eleventh processing step, indicated in Figure 3 by means of reference sign 11, an information regarding the successful registration is transmitted to the customer, e.g. by e-mail, i.e. the customer premises equipment 50 is able to be operatively used with the broadband access network 120 using the wireline access communication link 50" for communication services (i.e. not according to the restricted mode of operation).

According to a further embodiment of the present invention, not specifically represented in Figure 3, the service provider information corresponds to or comprises an indication or confirmation that a predetermined (specific) service provider is available, to the (or, rather, to this) customer premises equipment 50, when using the wireline access communication link 50" and the access node 151. This typically corresponds to the customer premises equipment 50 used being provided by (or linked to) the specific service provider used such as a 'branded' customer premises equipment 50 where the customer, typically, does not have a choice which one of the (in principle, typically more than one) available service providers is chosen or selected to provide communication services.

## Claims

1. Method for enabling or setting up to operatively use a customer premises equipment (50) with a broadband access network (120) of a telecommunications network (100) in view of the broadband access network (120) or the telecommunications network (100) providing, using a wireline access communication link (50"), communication services to the customer premises equipment (50) or to a client device (51) related or connected to the customer premises equipment (50),
wherein the broadband access network (120) comprises at least one access node (151), the access node (151) being enabled to operatively connect the customer premises equipment (50) to the telecommunications network (100), wherein, in view of enabling or setting up to operatively use the customer premises equipment (50), the method comprises the following:
-- transmitting, by the customer premises equipment (50) and via the wireline access communication link (50"), an identifier information to the access node (151), the identifier information relating to the customer premises equipment (50) and the transmission of the identifier information resulting in the customer premises equipment (50) and/or the client device (51) being able to be used, via the wireline access communication link (50"), for restricted communication services, and thereafter
-- receiving, by the customer premises equipment (50) and/or by the client device (51) and via the wireline access communication link (50") and as part of the restricted communication services, a service provider information,
-- transmitting, by the customer premises equipment (50) and/or by the client device (51) and via the wireline access communication link (50") and as part of the restricted communication services, a credential information, and thereafter
-- allowing the customer premises equipment (50) to be operatively used with the broadband access network (120) using the wireline access communication link (50") for communication services.

2. Method according to claim 1, wherein the service provider information corresponds to or comprises or references a list of service provider, that are available, to the customer premises equipment (50), when using the wireline access communication link (50") and the access node (151), wherein the method furthermore comprises:
-- transmitting, by the customer premises equipment (50) and/or by the client device (51) and via the wireline access communication link (50") and as part of the restricted communication services, a provider selection information in response to the service provider information, and thereafter,
-- receiving, by the customer premises equipment (50) and/or by the client device (51) and via the wireline access communication link (50") and as part of the restricted communication services, a credential request information, wherein the credential information is transmitted in response to the credential request information.

3. Method according to claim 1, wherein the service provider information corresponds to or comprises an indication or confirmation that a predetermined service provider is available, to the customer premises equipment (50), when using the wireline access communication link (50") and the access node (151),
wherein especially the customer premises equipment (50) and/or the client device (51) receives, via the wireline access communication link (50") and as part of the restricted communication services, a credential request information, wherein the credential information is transmitted in response to the credential request information.

4. Method according to one of the preceding claims, wherein an access configuration entity or functionality (210) is related to or assigned to or part of the broadband access network (120), wherein the access configuration entity or functionality (210) transmits, via the access node (151) and using the wireline access communication link (50"), the service provider information, wherein especially the access configuration entity or functionality (210) receives the provider selection information,
wherein especially the access configuration entity or functionality (210) transmits, via the access node (151) and using the wireline access communication link (50"), the credential request information.

5. Method according to one of the preceding claims, wherein the service provider information and/or the credential request information is transmitted by the access node (151) or, at least, via the access node and using the wireline access communication link (50").

6. Method according to one of the preceding claims, wherein the broadband access network (120) comprises a customer determination entity or functionality (130), wherein, in case that the customer premises equipment (50) is unknown to the telecommunications network (100) or has previously not been connected to the telecommunications network (100), using the restricted communication services involves a user plane communication channel being established between the customer premises equipment (50) and the customer determination entity or functionality (130), via the specific access node (151).

7. Method according to one of the preceding claims, wherein allowing the customer premises equipment (50) to be operatively used for communication services involves the verification of the credential information and the corresponding configuration of the access node (151).

8. System or broadband access network (120) for enabling or setting up to operatively use a customer premises equipment (50) with the broadband access network (120) of a telecommunications network (100) in view of the broadband access network (120) or the telecommunications network (100) providing, using a wireline access communication link (50"), communication services to the customer premises equipment (50) or to a client device (51) related or connected to the customer premises equipment (50),
wherein the broadband access network (120) comprises at least one access node (151), the access node (151) being enabled to operatively connect the customer premises equipment (50) to the telecommunications network (100), wherein, in view of enabling or setting up to operatively use the customer premises equipment (50), the system or broadband access network (120) is configured such that:
-- the broadband access network (120) or the access node (151) receives an identifier information, transmitted by the customer premises equipment (50) and via the wireline access communication link (50"), the identifier information relating to the customer premises equipment (50) and the reception of the identifier information resulting in the customer premises equipment (50) and/or the client device (51) being able to be used, via the wireline access communication link (50"), for restricted communication services,
-- the broadband access network (120) transmits, via the wireline access communication link (50") and as part of the restricted communication services, a service provider information,
-- the broadband access network (120) or the access node (151) receives a credential information, transmitted by the customer premises equipment (50) and/or by the client device (51) and via the wireline access communication link (50"),
resulting in the access node (151) to be configured such that the customer premises equipment (50) is able to be operatively used with the broadband access network (120) using the wireline access communication link (50") for communication services.

9. Customer premises equipment (50) in a system or in a broadband access network (120), or as a part thereof, according to claim 8 or used in a method according to claims 1 to 7.

10. Access configuration entity or functionality (210) in a system or in a broadband access network (120), or as a part thereof or assigned thereto, according to claim 8 or used in a method according to claims 1 to 7.

11. Program comprising a computer readable program code which, when executed on a computer and/or on a network node of a telecommunications network (100) or of a broadband access network (120) and/or on a customer premises equipment (50) and/or on an access configuration entity or functionality (210), causes the computer and/or the network node of the telecommunications network (100) or of the broadband access network (120) and/or the customer premises equipment (50) and/or the access configuration entity or functionality (210) to perform a method according one of claims 1 to 7.

12. Computer-readable medium comprising instructions which when executed on a computer and/or on a network node of a telecommunications network (100) or of a broadband access network (120) and/or on a customer premises equipment (50) and/or on an access configuration entity or functionality (210), causes the computer and/or the network node of the telecommunications network (100) or of the broadband access network (120) and/or the customer premises equipment (50) and/or the access configuration entity or functionality (210) to perform a method according one of claims 1 to 8.
